**Europäisches Patentamt**

**European Patent Office**

**Office européen des brevets**

(19)

(11) Veröffentlichungsnummer : **0 140 987**
**B1**

(12) # EUROPÄISCHE PATENTSCHRIFT

(45) Veröffentlichungstag der Patentschrift :
23.12.87

(21) Anmeldenummer : 83110487.2

(22) Anmeldetag : 20.10.83

(51) Int. Cl.⁴ : **A 47 J 27/14**, A 47 J 27/18,
**G 07 F 9/10**

(54) **Vorrichtung zum Kochen von Nahrungsmitteln.**

(30) Priorität : 03.10.83 IT 6671183

(43) Veröffentlichungstag der Anmeldung :
15.05.85 Patentblatt 85/20

(45) Bekanntmachung des Hinweises auf die Patenterteilung : 23.12.87 Patentblatt 87/52

(84) Benannte Vertragsstaaten :
AT BE CH DE FR GB IT LI LU NL SE

(56) Entgegenhaltungen :
DE-A- 2 247 071
DE-C- 337 042
DE-C- 933 666
GB-A- 150 362

(73) Patentinhaber : **Interimport F. Caceffo GmbH**
**Stresemannstrasse 15**
**D-4800 Bielefeld 1 (DE)**

(72) Erfinder : **Luchetti, Lorenzo**
**Via Maratta 19G**
**I-05100 Terni (IT)**

(74) Vertreter : **Patentanwälte TER MEER - MÜLLER -**
**STEINMEISTER**
**Mauerkircherstrasse 45**
**D-8000 München 80 (DE)**

EP 0 140 987 B1

## Beschreibung

Die Erfindung betrifft eine Vorrichtung zum Kochen von Nahrungsmitteln, insbesondere Teigwaren, Trockengemüse oder dergleichen, mit einem Heißwassergenerator, einer mit diesem verbundenen Kochkammer, einem in die Kochkammer eintretenden Nahrungsmitteleinlaß und einer der Kochkammer über einen Auslaß nachgeschalteten Trennkammer.

In Gaststätten, insbesondere Schnellrestaurants, oder bei Abgabe von warmen Speisen über Automaten ist es von besonderer Bedeutung, diese möglichst rasch und ohne den Zeitaufwand eines herkömmlichen Kochvorganges zur Verfügung zu haben. Dies gilt beispielsweise für die Zubereitung von Nahrungsmitteln wie Teigwaren, insbesondere Spaghetti, Reis, Trockengemüse und dergleichen. Aus der DE-A-22 47 071 und der dieser im wesentlichen entsprechenden US-A-3 937 135 ist daher eine gattungsgemäße Vorrichtung bekannt, durch die die erwähnten Nahrungsmittel mit unter Überdruck stehendem Wasser in kurzer Zeit gekocht werden. Die Einhaltung eines Wasserüberdrucks führt einmal zur Beschleunigung des Kochvorganges und dient andererseits dazu, zu verhindern, daß das Wasser in Dampf übergeht, so daß die Speisen beim Kochvorgang vollständig mit Wasser bedeckt bleiben. Dies ist erforderlich im Interesse eines kontrollierten, gleichmäßigen Kochens der Speisen.

Bei dieser bekannten Vorrichtung stellen der Heißwassergenerator, die Kochkammer und die Trennkammer getrennte, nebeneinander angeordnete und über Leitungen verbundene Einheiten dar. Dadurch ergibt sich ein beträchtlicher Raumbedarf. Die Trennkammer, die als Wirbeltrennkammer ausgeführt ist, liegt seitlich neben und unterhalb der Kochkammer, und die Förderung der Speisen aus der Kochkammer in die Trennkammer erfolgt lediglich mit Hilfe des Druckstoßes, der sich beim Öffnen eines zwischen Kochkammer und Trennkammer liegenden Ventils nach einem Kochvorgang ergibt. Es besteht daher die Gefahr, daß Reste der Speichen in der Kochkammer oder der Verbindungsleitung verbleiben. Der beim Öffnen der Kochkammer durch Druckabfall entstehende Wasserdampf wird an die Umgebung abgegeben.

Da der Heißwassergenerator, die Kochkammer und die Trennkammer gesondert angeordnet sind und der sich bildende Dampf aus der Trennkammer an die Umgebung abgegeben wird, ergeben sich erhebliche Energieverluste und ein hoher Energiebedarf der Vorrichtung. Dieser Gesichtspunkt fällt insbesondere dann ins Gewicht, wenn die Vorrichtung nur in größeren Zeitabständen eingesetzt wird und in der Zwischenzeit vollständig auskühlen kann.

Aus der DE-C-337 042 ist eine Vorrichtung zur Herstellung von Säften und Gelees unter gleichzeitiger Gewinnung von Marmelade oder Mus bekannt. Ein rohrförmiger Kochbehälter verläuft schräg durch einen Behälter, der ein Wasserbad aufnimmt. Der rohrförmige Kochbehälter tritt schräg seitlich aus dem Wasserbad aus, so daß mit Hilfe einer senkrechten Handkurbelwelle ein Abstreicher auf einem Sieb am Auslaß des Kochbehälters gedreht werden kann.

Der Erfindung liegt die Aufgabe zugrunde, eine Vorrichtung der eingangs genannten Art zu schaffen, die rasch, zuverlässig und energiesparend arbeitet und in kompakter Form hergestellt werden kann.

Diese Aufgabe wird erfindungsgemäß bei einer eingangs genannten Vorrichtung dadurch gelöst, daß der Heißwassergenerator und die Trennkammer im oberen bzw. unteren Teil eines gemeinsamen, durch eine waagerechte Trennwand getrennten Gehäuses angeordnet sind und daß die Kochkammer als im wesentlichen senkrechtes, am oberen und unteren Ende mit Ventilen versehenes Rohr innerhalb des Heißwassergenerators ausgebildet ist, das nach oben über eine obere Deckplatte des Heißwassergenerators hinausragt und nach unten unterhalb der waagerechten Trennwand in die Trennkammer mündet. Durch die Anordnung der Trennkammer unmittelbar unterhalb der Kochkammer ist sichergestellt, daß die gekochten Speisen bei Beendigung des Kochvorganges zuverlässig aufgrund der Schwerkraft und der zwischen der Kochkammer und der Trennkammer bestehenden Druckdifferenz in die Trennkammer überführt werden.

Die Zusammenfassung des Heißwassergenerators, der Kochkammer und der Trennkammer zu einer Einheit führt zur Verringerung der Energieverluste und zu einer Verkürzung der Bearbeitungszeit aufgrund kürzerer Beförderungswege der Speisen. Der Nahrungsmitteleinlaß befindet sich an der oberen Seite der Kochkammer, so daß die Nahrungsmittel kontinuierlich von oben nach unten unter Ausnutzung der Schwerkraft bewegt werden können. Der Heißwassergenerator und die Trennkammer liegen im oberen bzw. unteren Teil eines gemeinsamen, durch eine waagerechte Trennwand getrennten Gehäuses, während die im wesentlichen rohrförmig ausgebildete Kochkammer konzentrisch von oben in den Heißwassergenerator eintritt, die Trennwand durchläuft und in der Trennkammer ihre Auslaßöffnung aufweist. Ventile oder Klappen befinden sich im Bereich des Nahrungsmitteleinlasses und des Auslasses. Heißwasser kann von dem die Kochkammer umgebenden Heißwassergenerator auf kürzestem Wege der Kochkammer zugeführt werden.

Besondere Ausführungsarten der Erfindung sind in den abhängigen Ansprüchen 2-8 angegeben.

Die Kochkammer erweitert sich im Inneren des Heißwassergenerators vorzugsweise kegelstumpfförmig. Das den Heißwassergenerator und die Trennkammer aufnehmende Gehäuse besteht vorzugsweise von oben nach unten aus drei kegelstumpfförmigen Abschnitten, deren oberer sich nach unten erweitert, während die beiden unteren nach unten zusammenlaufen. Im Bereich der Verbindungsstelle können nach außen vorspringende Flansche zur Befestigung der Abschnitte aufeinander vorgesehen sein.

Vorzugsweise ist eine Pumpe vorgesehen, die das in dem Heißwassergenerator befindliche Wasser auf einem vorgegebenen Überdruck hält. Dieses Wasser kann zunächst durch einen oder auch zwei Wärmetauscher geleitet werden, die von dem aus der Kochkammer und der Trennkammer abgeleiteten Wasserdampf im Gegenstrom durchlaufen werden.

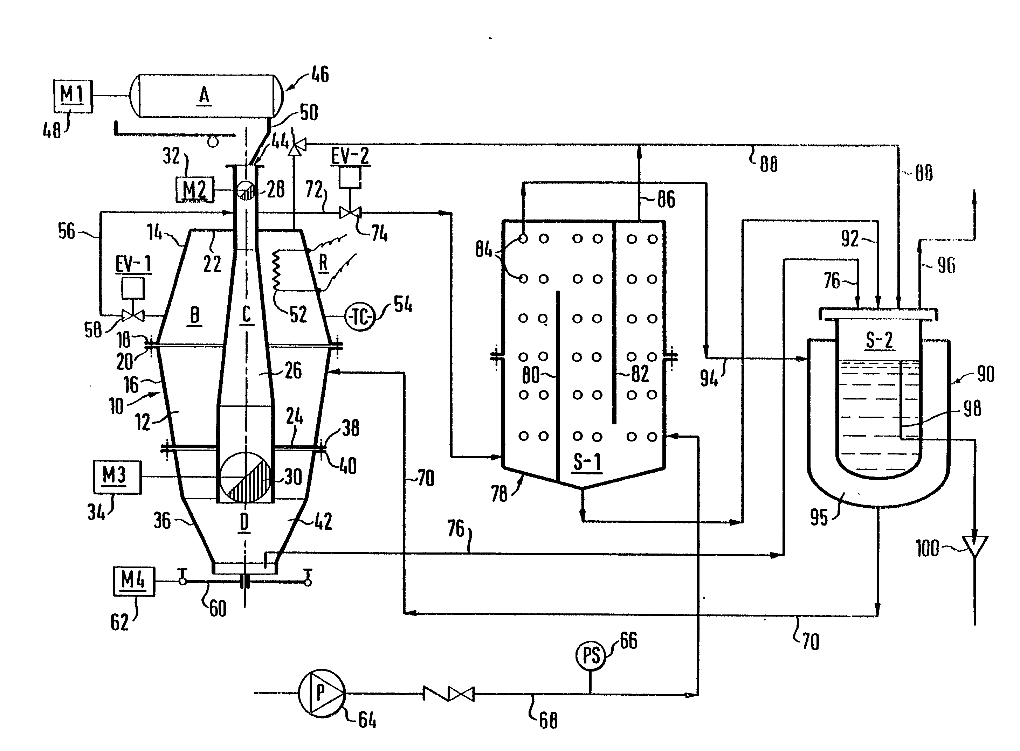

Im folgenden werden bevorzugte Ausführungsbeispiele der Erfindung anhand der beigefügten Zeichnung näher erläutert.

Die einzige Figur zeigt einen schematischen Schnitt durch eine erfindungsgemäße Vorrichtung mit zwei Wärmetauschern.

In der Zeichnung ist auf der linken Seite ein Gehäuse 10 gezeigt, das in seinem oberen, mit dem Buchstaben B gekennzeichneten Teil einen Heißwassergenerator 12 bildet. Im Bereich des Heißwassergenerators 12 besteht das Gehäuse 10 aus zwei übereinanderliegenden Abschnitten 14, 16, die kegelstumpfförmig nach oben bzw. unten zusammenlaufen und miteinander über nach außen vorspringende Flansche 18, 20 verbunden sind. Der obere Abschnitt 14 ist nach oben durch eine Deckplatte 22, der untere Abschnitt 16 nach unten durch eine waagerechte Trennwand 24 verschlossen.

Durch die obere Deckplatte 22, den gesamten Heißwassergenerator 12 und die untere Trennwand 24 verläuft konzentrisch zu dem Heißwassergenerator entlang einer im wesentlichen senkrechten Achse ein kegelstumpfförmig nach unten erweitertes Rohr, das die Kochkammer 26 bildet. Oberhalb der oberen Deckplatte 22 und unterhalb der unteren Trennwand 24 befinden sich in dem die Kochkammer 26 bildenden Rohr Ventile 28, 30 in der Form von Klappen, Schiebern, Kugelventilen oder dergleichen, denen jeweils elektrische Stellmotoren 32, 34 zugeordnet sind, die mit den Bezeichnungen M2 und M3 gekennzeichnet sind. Auf die Funktion dieser Ventile und Stellmotoren soll später genau eingegangen werden. Zwischen den Ventilen befindet sich die eigentliche Kochkammer in einem mit C gekennzeichneten Bereich.

Unterhalb der unteren Trennwand 24 des Heißwassergenerators weist das Gehäuse 10 einen weiteren, in zwei Stufen kegelstumpfförmig nach unten zusammenlaufenden Abschnitt 36 auf, der mit dem unteren Abschnitt 16 des Heißwassergenerators über nach außen vorspringende Flansche 38, 40 verbunden ist. Der untere Abschnitt 36 bildet die Trennkammer 42, die mit dem Buchstaben D gekennzeichnet ist.

Das obere offene Ende des die Kochkammer 36 bildenden Rohres, an dem sich das Ventil 28 befindet, stellt einen Nahrungsmitteleinlaß 44 dar. Eine nicht näher gezeigte Zufuhreinrichtung 46 (A) oberhalb des Nahrungsmitteleinlasses 44, die einen Stellmotor 48 (M1) aufweist, bewirkt jeweils bei Betätigung der Vorrichtung die Zufuhr einer portionierten Nahrungsmittelmenge über eine Rutsche 50 in den Nahrungsmitteleinlaß 44.

Eine schematisch angedeutete elektrische Widerstandsheizung 52 (R) dient zur Aufheizung des in dem Heißwassergenerator befindlichen Wassers und wird mit Hilfe eines Thermostaten 54 (TC) entsprechend einer Wassertemperatur von 120-180 ºC geregelt.

Der Heißwassergenerator 12 ist mit der Kochkammer 26 über eine Leitung 56 verbunden, in der sich ein elektromagnetisches Ventil 58 (EV-1) befindet. Die Leitung 56 ist der besseren Übersichtlichkeit wegen herausgezogen dargestellt, kann jedoch auch unmittelbar auf kürzestem Wege zwischen dem Heißwassergenerator und der Kochkammer verlaufen.

Unterhalb der Trennkammer 42 befindet sich ein aufklappbarer Verschluß 60, der mit Hilfe eines Stellmotors 62 (M4) betätigt werden kann.

Die Frischwasserzufuhr zu dem Heißwassergenerator 12 erfolgt mit Hilfe einer Pumpe 64, die Wasser aus einem Wasserleitungsnetz entnimmt und unter dem Einfluß eines Druckregelventils 66 (PS) über Leitungen 68, 70 dem Heißwassergenerator zuführt. Der Druck im Heißwassergenerator wird mit Hilfe des Druckregelventils 66 auf 6 bis 15 bar eingestellt.

Wasserdampf wird aus der Kochkammer 26 nach Beendigung eines Kochvorgangs über eine Leitung 72, die mit einem elektromagnetischen Ventil 74 (EV-2) versehen ist, abgelassen. Im übrigen wird im Bereich der Trennkammer 42 das dort mit den fertigen Speisen vermischte Wasser über eine Leitung 76 abgeführt.

Erfindungsgemäß wird das über die Pumpe 64 dem Heißwassergenerator 12 zugeführte Wasser unter Ausnutzung der Restenergie des aus der Trennkammer und der Kochkammer austretenden Dampfes oder heißen Wassers vorerwärmt. Dies geschieht im dargestellten Beispiel mit Hilfe von zwei Wärmetauschern, auf deren Funktion im folgenden eingegangen werden soll.

Der Wasserdampf aus der Kochkammer 26 strömt über die Leitung 72 und das Ventil 74 in einen ersten Wärmetauscher 78 (S-1), der durch Trennwände 80, 82 labyrinthartig aufgeteilt ist. Andererseits tritt in ein innerhalb dieses Wärmetauschers angeordnetes Röhrensystem 84 das von der Pumpe 64 über die Leitung 68 zugeführte kalte Wasser ein. Während sich dieses Wasser erwärmt, wird der Dampf aus der Leitung 72 weitgehend zu Wasser kondensiert. Verbleibender Dampf gelangt über die Leitungen 86, 88 zu einem zweiten Wärmetauscher 90 (S-2), während das kondensierte Wasser über eine Leitung 92 ebenfalls diesem Wärmetauscher 90 zugeführt wird. Schließlich nimmt dieser Wärmetauscher 90 auch das aus der Trennkammer 42 austretende warme Wasser über die Leitung 76 auf.

Aus dem Röhrensystem 84 des ersten Wärmetauschers 78 gelangt das von der Pumpe 64 zugeführte, vorerwärmte Wasser über eine Leitung 94 in einen Mantel 95 des zweiten Wärmetauschers 90. Das Frischwasser wird weiter erwärmt und strömt schließlich über die bereits erwähnte Leitung 70 zu dem Heißwassergenerator 12.

Die erfindungsgemäße Vorrichtung arbeitet folgendermaßen.

Wenn die Maschine eingeschaltet wird, erwärmt sich das Wasser innerhalb des Heißwassergenerators 12 innerhalb einer Zeit von beispielsweise 15 Minuten auf eine vorgegebene, an dem Thermostat 54 einzustellende Temperatur im Bereich von 120 bis 180 °C. Die Pumpe 64 regelt den Wasserdruck mit Hilfe des Druckregelventils 66 auf 6 bis 15 bar ein. Die Vorrichtung befindet sich nunmehr in der Bereitschaftsstellung. Sofern eine Portion eines gewünschten Nahrungsmittels abgegeben werden soll, wird ein entsprechender Schalter oder Druckknopf betätigt. Die Zufuhreinrichtung 46 gibt eine Portion des unbehandelten Nahrungsmittels durch den Nahrungsmitteleinlaß 44 in die Kochkammer 26 ab, deren unteres Ventil 30 geschlossen ist. Anschließend wird auch das obere Ventil 28 geschlossen, und heißes Wasser wird aus dem Heißwassergenerator 12 über das Ventil 58 und die Leitung 56 in die Kochkammer 26 eingeleitet. Bei offenem Ventil 58 regelt die Pumpe 64 den Wasserdruck entsprechend den gewünschten Werten nach. Die Pumpe schaltet sich ab und das Ventil 58 wird geschlossen.

Ist die Nahrungsmittelportion gar, so öffnet sich das Ventil 74 in der Leitung 72, und der in der Kochkammer sich bildende Wasserdampf wird zur Erzielung angemessener Druckbedingungen über die Leitung 72 in den Wärmetauscher 78 abgelassen. Ein gewisser Überdruck kann jedoch in der Kochkammer 26 verbleiben. Das Ventil 30 wird geöffnet, und das gekochte Nahrungsmittel fällt in die Trennkammer 42 herab und bleibt auf deren unterem Verschluß 60 liegen. Von dort aus wird das beigemischte Wasser über die Leitung 76 in den zweiten Wärmetauscher 90 abgeführt. Nachdem das Nahrungsmittel ausreichend getrocknet ist, öffnet sich der Verschluß 60 mit Hilfe des Stellmotors 62, und das Nahrungsmittel fällt herab auf einen unterhalb angeordneten, nicht gezeigten Teller oder dergleichen. Zutaten und Gewürze können anschließend automatisch oder auch von Hand zugegeben werden.

Anschließend kann ein nächster Abgabezyklus ablaufen. Das von der Pumpe 64 zugeführte Frischwasser wird in den Wärmetauschern 78, 90 laufend mit dem abgeführten Wasserdampf und Warmwasser in Wärmeaustausch gebracht und vorgewärmt. In Abweichung von der dargestellten Ausführungsform kann das Frischwasser zunächst mit dem Wärmetauscher 90 und dann mit dem heißeren Wärmetauscher 78 in Wärmeaustausch gebracht werden, so daß auch insoweit das Gegenstromprinzip angewendet wird. Durch den Wärmeaustausch wird das in den Heißwassergenerator 12 eingeleitete Wasser bereits derart vorerwärmt, daß die Widerstandsheizung 52 lediglich eine begrenzte Temperaturerhöhung vornehmen muß. Dadurch ergibt sich eine beträchtliche Energieersparnis.

Eine weitere Energieeinsparung wird erreicht durch die kompakte Bauweise der Anordnung aus Heißwassergenerator 12, Kochkammer 26 und Brennkammer 42. Da die Kochkammer 26 entsprechend einer bevorzugten Ausführungsform im Inneren des Heißwassergenerators 12 angeordnet ist, befindet sie sich nach dem Eintritt der Betriebsbereitschaft der Vorrichtung stets auf einer verhältnismäßig hohen Temperatur, so daß sie nicht bei jedem Kochvorgang durch das zugeführte heiße Wasser aufgeheizt werden muß. Der Heißwassergenerator 12 kann bei geeigneter Isolierung seiner Mantelflächen bei verhältnismäßig geringer Heizleistung der Widerstandsheizung 52 stets auf der gewünschten Temperatur gehalten werden.

Aus dem in der Zeichnung gezeigten Wärmetauscher 90 tritt nach oben ein Dampfauslaß 96 für etwaigen Restdampf aus. Ein Überlauf 98 hält das Wasser innerhalb des Wärmetauschers auf einer konstanten Höhe und führt überschüssiges Wasser in einen Wasserauslaß 100 ab.

Die Wärmetauscher 78, 90 und das zugehörige Rohrleitungssystem können wesentlich kompakter ausgeführt werden, als es in der Zeichnung der besseren Übersicht wegen dargestellt ist, und kann insbesondere unmittelbar an das Gehäuse 10 herangerückt werden.

**Patentansprüche**

1. Vorrichtung zum Kochen von Nahrungsmitteln, insbesondere Teigwaren, Trockengemüse oder dergleichen, mit einem Heißwassergenerator (12), einer mit diesem verbundenen Kochkammer (26), einem in die Kochkammer (26) eintretenden Nahrungsmitteleinlaß und einer der Kochkammer (26) über einen Auslaß nachgeschalteten Trennkammer (42), dadurch gekennzeichnet, daß der Heißwassergenerator (12) und die Trennkammer (42) im oberen bzw. unteren Teil eines gemeinsamen, durch eine waagerechte Trennwand (24) getrennten Gehäuses (10) angeordnet sind und daß die Kochkammer (26) als im wesentlichen senkrechtes, am oberen und unteren Ende mit Ventilen (28, 30) versehenes Rohr innerhalb des Heißwassergenerators (12) ausgebildet ist, das nach oben über eine obere Deckplatte (22) des Heißwassergenerators hinausragt und nach unten unterhalb der waagerechten Trennwand (24) in die Trennkammer (42) mündet.

2. Vorrichtung nach Anspruch 2, dadurch gekennzeichnet, daß die Kochkammer (26) innerhalb des Heißwassergenerators (12) nach unten kegelstumpfförmig erweitert ist.

3. Vorrichtung nach einem der Ansprüche 1 oder 2, dadurch gekennzeichnet, daß innerhalb des Heißwassergenerators (12) eine mit Hilfe eines Thermostaten (54) geregelte, elektrische Heizung (52) angeordnet ist, und daß der Heißwassergenerator (12) mit einer Zufuhr-Leitung (70) für Frischwasser verbunden ist, in der eine Pumpe (64) mit Druckregelventil (66) angeordnet ist.

4. Vorrichtung nach einem der Ansprüche 1 bis 3, dadurch gekennzeichnet, daß oberhalb des Nahrungsmitteleinlasses (44) eine Dosier- und Zufuhreinrichtung (46) für rohe Nahrungsmittel angeordnet ist.

5. Vorrichtung nach einem der Ansprüche 1 bis 4, dadurch gekennzeichnet, daß der Boden der Trennkammer (42) als aus zwei schwenkbaren Klappen bestehender Verschluß (60) ausgebildet ist.

6. Vorrichtung nach einem der Ansprüche 1 bis 5, dadurch gekennzeichnet, daß der Heißwassergenerator (12) und die Kochkammer (26) über eine ein Ventil (58) einschließende Leitung (56) verbunden sind.

7. Vorrichtung nach einem der Ansprüche 3 bis 6, dadurch gekennzeichnet, daß aus der Kochkammer (26) und der Trennkammer (42) Leitungen (72, 76) zur Abgabe von Dampf und warmem Wasser austreten und daß diese Leitungen wenigstens einem Wärmetauscher (78, 90) zugeführt werden, in dem ein Wärmeaustausch mit dem über die Leitung (70) von der Pumpe (64) zuge-führten Frischwasser für den Heißwassergenera-tor erfolgt.

8. Vorrichtung nach einem der vorhergehenden Ansprüche, gekennzeichnet durch ein zentrales, zeitlich koordiniertes Steuersystem für die einzelnen Stell- und Schaltvorgänge der Vorrichtung.

## Claims

1. Apparatus for cooking foodstuff, particularly noodles, dried vegetables or the like, comprising a hot water generator (12), a cooking chamber (26) connected with the hot water generator, a foodstuff inlet entering into the cooking chamber (26) and a separation chamber (42) connected with an outlet of the cooking chamber (26), characterized in that the hot water generator (12) and the separation chamber (42) are located in the upper and lower part of a common housing (10), respectively, separated by a horizontal partition (24), and that the cooking chamber (26) is formed as an substantially vertical tube provided with valves (28, 30) at the upper and lower ends thereof, the tube being arranged inside the hot water generator (12), the tube projecting out of an upper cover plate (22) of the hot water generator and merging below the horizontal partition (24) into the separation chamber (42).

2. Apparatus as claimed in claim 1, characterized in that the cooking chamber (26) is conically enlarged toward the bottom.

3. Apparatus as claimed in claim 1 or 2, characterized in that an electric heating (52) controlled by a thermostat (54) is located inside the hot water generator (12), and that the hot water generator (12) is provided with a supply line (70) for fresh water, a pump (64) having a pressure control valve (66) being provided in said supply line.

4. Apparatus as claimed in one of claims 1 to 3, characterized in that a metering and supply device (46) for raw foodstuff is arranged above the foodstuff inlet (44).

5. Apparatus as claimed in one of claims 1 to 4, characterized in that the bottom of the separation chamber (42) is formed as closure (60) consisting of two pivotal flaps.

6. Apparatus as claimed in one of claims 1 to 5, characterized in that the hot water generator (12) and the cooking chamber (26) are connected through a line (56) including a valve (58).

7. Apparatus as claimed in one of claims 3 to 6, characterized in that lines (72, 76) for dispensing steam and warm water are emerging from said cooking chamber (26) and said separation chamber (42), and that these lines extend to at least one heat exchangers (78, 79) providing a heat exchange with the fresh water supplied through the line (70) by the pump (64) to the hot water generator.

8. Apparatus as claimed in one of the preceding claims, characterized by a common control system coordinated in time for controlling the switching and operation steps of the procedure.

## Revendications

1. Installation pour cuire des aliments, en particulier des pâtes alimentaires, des légumes secs ou des produits analogues, avec un générateur d'eau chaude (12), une chambre de cuisson (26) reliée à celui-ci, une entrée de produits alimentaires pénétrant dans la chambre de cuisson et une chambre de séparation (42) montée en aval de la chambre de cuisson (26) par l'intermédiaire d'une sortie, caractérisée en ce que le générateur d'eau chaude (12) et la chambre de séparation (42) sont disposés dans la partie supérieure ou inférieure d'une carcasse commune (10) séparée par une cloison horizontale (24) et que la chambre de cuisson (26) est conformée, à l'intérieur du générateur d'eau chaude (12), en tuyau essentiellement vertical dont les extrémités supérieure et inférieure sont munies de soupapes (28, 30), qui dépasse en haut une plaque de recouvrement (22) du générateur d'eau chaude et débouche en bas, en dessous de la cloison horizontale (24), dans la chambre de séparation (42).

2. Installation selon la revendication 1, caractérisée en ce que, à l'intérieur du générateur d'eau chaude (12), la chambre de cuisson (26) s'élargit vers le bas en forme de tronc de cône.

3. Installation selon l'une des revendications 1 ou 2, caractérisée en ce qu'un système de chauffage électrique (52) réglé à l'aide d'un thermostat (54) est monté à l'intérieur du générateur d'eau chaude (12) et que le générateur d'eau chaude, (12) est raccordé à une conduite d'arrivée (70) pour l'alimentation en eau fraîche dans laquelle est insérée une pompe (64) avec soupape de régulation de pression (66).

4. Installation selon l'une quelconque des revendications 1 à 3, caractérisée en ce qu'un dispositif de dosage et d'amenée (46) pour des aliments crus est monté au-dessus de l'entrée de produits alimentaires (44).

5. Installation selon l'une quelconque des revendications 1 à 4, caractérisée en ce que le fond de la chambre de séparation (42) est conformé en obturateur (60) composé de deux volets pivotants.

6. Installation selon l'une quelconque des revendications 1 à 5, caractérisée en ce que le générateur d'eau chaude (12) et la chambre de cuisson (26) sont reliés par une conduite (56) comprenant une soupape (58).

7. Installation selon l'une quelconque des revendications 3 à 6, caractérisée en ce que des conduites (72, 76) pour l'émission de vapeur et d'eau chaude partent de la chambre de cuisson (26) et de la chambre de séparation (42) et que ces conduites se dirigent vers au moins un échangeur de chaleur (78, 90) dans lequel s'effectue un échange de chaleur avec l'eau fraîche pour le générateur d'eau chaude (12) qui est amenée par la pompe (64) par l'intermédiaire de la conduite (70).

8. Installation selon l'une quelconque des revendications précédentes, caractérisée en ce qu'elle comprend un système de commande central avec coordination temporelle pour les différentes opérations de réglage et de commutation de l'installation.

0 140 987